(19) Europäisches Patentamt
European Patent Office
Office européen des brevets

(11) Publication number: 0 093 073 B1

(12) EUROPEAN PATENT SPECIFICATION

(45) Date of publication of patent specification: 28.01.87

(51) Int. Cl.$^4$: C 08 F 136/06, C 08 F 4/70

(21) Application number: 83630069.9

(22) Date of filing: 21.04.83

# (54) Molecular weight control of polybutadiene.

(30) Priority: 26.04.82 US 371842

(43) Date of publication of application:
02.11.83 Bulletin 83/44

(45) Publication of the grant of the patent:
28.01.87 Bulletin 87/05

(84) Designated Contracting States:
DE FR GB IT NL

(58) References cited:
FR-A-2 139 267
US-A-3 856 764
US-A-3 910 869
US-A-3 962 375

Die Makromolekulare Chemie, vol. 139, pages 73-81 (1970)

(73) Proprietor: THE GOODYEAR TIRE & RUBBER COMPANY
1144 East Market Street
Akron, Ohio 44316 (US)

(72) Inventor: Castner, Kenneth Floyd
3845 Wisewood Street
Uniontown Ohio 44685 (US)
Inventor: Kuzma, Leonard Joseph
2523 Lawnshire Drive
Copley Ohio 44321 (US)

(74) Representative: Weyland, Joseph Jean Pierre
Goodyear International Tire Technical Center
Patent Department Avenue Gordon Smith
L-7750 Colmar-Berg (LU)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 093 073 B1

**Description**

Technical Field

This invention relates to the regulation of the molecular weight of a high cis-1,4-polybutadiene which has been prepared by polymerizing 1,3-butadiene by means of a catalyst system comprising an aluminum alkyl, soluble nickel salts and a third component which contains fluorine. The third component which contains fluorine should be hydrogen fluoride complex prepared by reacting hydrogen fluoride with a complexing agent.

Background of the Invention

Butadiene-1,3 has been polymerized to form high cis-1,4-polybutadiene employing organonickel-based catalyst systems and as cocatalyst systems aluminum alkyl compounds and hydrogen fluoride or a hydrogen fluoride complex.

For instance, in the United States Patent 3,856,764 issued December 24, 1974, there is disclosed a process for producing high cis-1,4-polybutadiene which comprises contacting 1,3-butadiene with a catalyst consisting of (1) at least one organoaluminum compound, (2) at least one nickel compound selected from the class consisting of nickel salts of carboxylic acids, organic complex compounds of nickel and nickel tetracarbonyl, and (3) at least one hydrogen fluoride complex prepared by complexing hydrogen fluoride with one or more members of a class consisting of ketones, esters, ethers, alcohols, nitriles and water.

In United States Patent 3,910,869 issued October 7, 1975, there is disclosed another process for the polymerization of 1,3-butadiene to form polymers containing a high proportion of the butadiene units in the cis-1,4-configuration. This process comprises contacting 1,3-butadiene under solution polymerization conditions with a catalyst comprising (1) an organoaluminum compound, (2) an organonickel compound and (3) hydrogen fluoride.

In the process of all of the aforementioned patents 1,3-butadiene is polymerized to a high cis-1,4-configuration polybutadiene of fairly high molecular weight in the neighborhood of 3.0 or greater than 3 DSV (dilute solution viscosity).

There are other United States patents which might be mentioned as producing a high cis-1,4-polybutadiene, such as U.S. Patent No. 3,170,907, issued February 23, 1965.

There are other patents which utilize aluminum alkyls, organonickel compounds and fluorine containing compounds to produce polybutadienes having various molecular weights and physical properties, such as U.S. Patent No. 3,725,492, issued April 3, 1969, and U.S. Patent No. 3,962,375, issued June 8, 1976. U.S. Patent 3,962,375 discloses a method of preparing polybutadiene utilizing a three-component catalyst system consisting of (1) an organoaluminum compound, (2) an organonickel compound, and (3) hydrogen fluoride, a hydrogen fluoride complex, or boron trifluoride. It further reveals that the three-component catalyst system can be improved by mixing the three catalyst components in the presence of a preforming agent selected from the group consisting of monoolefins, nonconjugated diolefins, cyclic nonconjugated multiolefins, acetylenic hydrocarbons, triolefins, vinyl ethers and aromatic nitriles. However, it does not describe the use of ethylene or any other α-olefin for controlling the molecular weight of the polybutadiene being produced.

In many applications of which cis-1,4-polybutadiene can be employed, it is usually desirable to employ a lower molecular weight polymer than those generally obtained from either one of the immediately aforementioned polymerization systems. For example, in the manufacture of tires, particularly automobile tires, it is usually desired to use a high cis-1,4-polybutadiene having a DSV of about 3 or slightly higher. On the other hand, if one desires to use the high cis-1,4-polybutadiene as a sealant or in a paint or some other application other than tires it is usually desirable to have a polybutadiene with a DSV of something less than 3, even to a liquid.

The process of the invention described herein deals with the use of ethylene to regulate the molecular weight of the above-mentioned polymerization systems. The utilization of ethylene as a molecular weight regulator expands the scope of the organoaluminum/organonickel/fluorine catalyzed 1,3-butadiene polymerization systems in a manner that the molecular weight of the cis-1,4-polybutadiene can be controlled from an extremely high molecular weight elastomer all the way down to a liquid polymer.

In the prior art there are syntheses of various molecular weight polybutadienes which can be produced by an anionic or an emulsion polymerization system by controlling the mechanism of the catalyst, the catalyst level or the chain transfer level, respectively. However, these polymerization systems do not necessarily yield a high cis-1,4-polybutadiene typical of the aluminum/nickel/fluorine-base solution polymerization systems mentioned above. As an example, in a typical alkyllithium initiated system, which is anionic in nature, the 1,3-butadiene is polymerized generally yielding about 36 to 45 weight percent cis-1,4-polymer, about 48 to 50 percent trans-1,4-polymer and about 8 to 10 percent of the 1,2-structure. Butadiene-1,3 has been polymerized in typical emulsion polymerization systems. These emulsion polymerization systems usually result in the polybutadiene having about 60 percent of the product in the trans-1,4-configuration, about 20 percent in the cis-1,4-structure and about 20 percent in the 1,2-structure.

Very low molecular weight polybutadienes have been synthesized using nickel compounds and aluminum halide compounds in solution polymerization systems. However, these catalyst

systems do not yield a very high cis-1,4 structure in the polybutadiene which is typical of the nickel carboxylate/organoaluminum/fluorine containing systems. They furthermore do not have the flexibility to yield high molecular weight polymers.

The uniqueness of the present invention is that it expands the scope of the high cis-1,4 directing 1,3-butadiene polymerization systems such that they can be employed for the synthesis of the polymers ranging from an elastomer useful in the production of automobile tires to an oily liquid useful in coatings and in other less demanding applications.

The effect of certain hydrocarbon compounds on the polyer intrinsic viscosity (η) in 1,3-butadiene polymerization systems employing nickel-based catalyst systems was studied by *Sakata et al*, and reported in *Die Makromolekulare Chemie, 139* (1970), pages 73—81. In these studies the authors employed a triethylaluminum/nickel carboxylate/boron trifluoride etherate catalyst system in benzene solvent. The hydrocarbons screened in this study included saturated hydrocarbons, such as propane, n-butane and isobutane. Alpha olefins, such as propylene, n-butane and isobutane. Alpha olefins, such as propylene, butene-1 and isobutene were studied, as well as internal olefins, such as cis- and trans-butene-2. Concerted diolefins, such as allene and 1,2-butadiene were tried as hydrocarbons to reduce the molecular weight. Further, acetylenes such as methylacetylene, and vinylacetylene, and nonconjugated diolefins, such as 4-vinylcyclohexene-1 were attempted to be used as molecular weight regulators. The authors of this paper concluded that saturated hydrocarbons and mono-olefins, such as alpha olefins and internal olefins show no effect on the polymer viscosity nor on the conversion. Further, they found that 4-vinylcyclohexene has the effect of lowering the polymer viscosity, however, in order to do so required such amounts as to preclude its employment as a useful molecular weight regulator. The acetylenes did not lower the molecular weight but they did have a very dramatic detrimental effect on polymer yields.

Summary of the Invention

The description of the catalyst system employed in the process of this invention which is (1) an organoaluminum compound, (2) an organonickel compound and (3) a fluorine-bearing compound selected from the group consisting of hydrogen fluoride and hydrogen fluoride complexes. The catalyst system will be discussed in greater detail further in this disclosure.

The present invention reveals a process for the regulation of the molecular weight of a high cis-1,4-polybutadiene prepared by polymerizing 1,3-butadiene in a solution of an aliphatic and/or cycloaliphatic solvent system employing as a catalyst system a mixture of (1) a nickel salt of a carboxylic acid, (2) a trialkylaminum compound, and (3) a fluorine containing compound prepared by complexing hydrogen fluoride with ethers; wherein the mole ratio of said trialkylaluminum compound to said nickel salt of a carboxylic acid ranges from 0.3/1 to 300/1, wherein the mole ratio of said fluorine containing compound to said nickel salt of a carboxylic acid ranges from 0.5/1 to 500/1, and wherein the mole ratio of the fluorine containing compound to the trialkylaluminum compound ranges from 0.4/1 to 15/1; characterized in that said polymerization is conducted in the presence of 0.48 to 1.83 parts by weight of ethylene per hundred parts by weight of 1,3-butadiene and in that the 1,4-polybutadiene prepared has a dilute solution viscosity at 30°C in toluene at a concentration of 0.25 grams per 50 milliliters of toluene of less than 3 dl/g.

Detailed Description

The trialkylaluminum compounds of this invention can be represented by the structural formula:

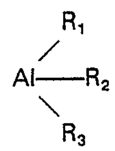

wherein $R_1$, $R_2$ and $R_3$ are alkyl groups or cycloalkyl groups. Representative, but not limiting of the compounds responding to the formula set forth above, are trimethylaluminum, triethylaluminum, tri-n-propylaluminum, triisopropylaluminum, tri-n-butylaluminum, triisobutylaluminum, tripentylaluminum, trihexylaluminum, tricyclohexylaluminum and trioctylaluminum.

The component of the catalyst of this invention which contains nickel is a nickel salt of a carboxylic acid. These nickel salts are soluble in the inert solvents utilized in the solution polymerizations of this invention. These soluble nickel salts are normally compounds of nickel with mono or bidentate organic ligands containing up to 20 carbon atoms. "Ligand" is defined as an ion or a molecule bound to and considered bonded to a metal atom or ion. "Monodentate" means having one position to which covalence or coordinate bonds with the metal may be formed; "bidentate" means having two positions to which covalence or coordinate bonds to the metal may be formed. Representative, but not exhaustive, of the nickel salts of carboxylic acids which can be used are nickel benzoate, nickel naphthenate, nickel octanoate, nickel palmitate and nickel stearate.

Another component of the catalyst system employed in this invention is a fluorine containing compound which is prepared by complexing hydrogen fluoride with ethers. The ethers which can be complexed with the hydrogen fluoride employed in the present invention can be defined by the formula: ROR', wherein R and R' represent an alkyl, a cycloalkyl, aryl, alkylaryl and arylalkyl containing from 1 to 30 carbon atoms; R and R' may be the same or dissimilar radicals. Representative but not exhaustive of such ethers are dimethylether, diethyl ether, dibutylether,

anisole, diphenylether and dicyclohexylether. The preferred complexes of the ether with hydrogen fluoride are hydrogen fluoride dibutyl etherate and hydrogen fluoride diphenyl etherate. Some of the advantages obtained by forming the ether complexes are that they are safer, easier and more accurately measured in the way of handling the hydrogen fluoride component of the catalyst system. Hydrogen fluoride usually complexes to form a complex having a lower vapor pressure, and the complex does not fume as much as does straight hydrogen fluoride. Hydrogen fluoride boils at 19.7°C, whereas a 40 percent by weight of a hydrogen fluoride diethyl-ether azeotrope or complex boils at about 74°C. When the hydrogen fluoride component is complexed the corrosiveness of the hydrogen fluoride is reduced. The hydrogen fluoride complex can be dissolved in a solvent and thus can be handled and charged to the polymerization system as a liquid solution rather than charging hydrogen fluoride as a gas or a limpid liquid. The solvent which can be employed to solubilize the hydrogen fluoride complex can be any of the inert solvents used as the solvent in the solution polymerization of this invention.

The complexes of hydrogen fluoride of this invention are usually prepared by simply dissolving an appropriate amount of an ether in a suitable solvent and adding the appropriate amount of hydrogen fluoride in a solvent or as a gas or a limpid liquid and mixing in the solvent system. The hydrogen fluoride being soluble in an inert solvent could be dissolved in a solvent separately and the two solvent systems mixed together. Another possible method would be to dissolve either the hydrogen fluoride or the ether in a suitable solvent and then adding the remaining components.

Another method of mixing would be to dissolve the ether in a solvent and simply bubble gaseous hydrogen fluoride through the system until the ether is reacted fully with the hydrogen fluoride.

The amount of ether needed cannot specifically be set forth. The amount of ether needed can vary depending on the conditions of the reaction system and the hydrogen bonding strength of the specific ether being utilized. Usually, the ether is employed at a one to one mole ratio with the hydrogen fluoride, but it is possible to use up to 4 moles of HF to 1 mole of ether complexing agent or up to 4 moles of complexing agent to 1 mole of HF.

The three component catalyst system of this invention has polymerization activity over a fairly wide range of catalyst concentrations and catalyst ratios. It is believed that the three catalyst components inter-react to form the active catalyst species. As a result, the optimum concentration of any catalyst component is somewhat dependent on the catalyst concentrations of the other two catalyst components. It should be appreciated that while polymerization will occur over a wide range of catalyst concentrations and ratios, polybutadiene having the most desirable properties will be obtained within a narrow range of catalyst component concentrations and ratios. Polymerization can occur when the mole ratio of the organoaluminum compounds (Al) to the nickel salts or nickel complex (Ni) ranges from about 0.3/1 to about 300/1; the mole ratio of the fluorine containing compound (F) to the organonickel compound (Ni) ranges from about 0.5/1 to about 500/1 and the mole ratio of the fluorine compound to the organoaluminum compound ranges from about 0.4/1 to about 15/1. However, a more preferred mole ratio of Al/Ni ranges from about 2/1 to about 80/1, and a preferred mole ratio of F/Ni ranges from about 3/1 to about 150/1, and the preferred mole ratio of F/Al ranges from about 1/1 to about 10/1.

The concentration, or the amounts of the catalyst components which are employed in the practice of this invention depend on factors such as the purity of the polymerization system, the polymerization rate desired, and the temperature employed.

In general, the polymerization of this invention is carried out in an inert solvent system which is aliphatic and/or cycloaliphatic in nature. Representative examples of these solvents are pentane, hexane, cyclohexane and butane. The solvent/butadiene volume ratio may be varied over a wide range, however, it is usually desired, or more convenient and economical, to use a solvent/monomer volume ratio of about 3/1 to about 6/1. This is not to say that higher or even lower solvent/monomer volume ratios cannot be employed.

It is usually desirable to conduct the polymerizations of this invention employing air-free and moisture-free techniques.

The polymerization temperatures employed in the present invention are not critical and may vary from a very low temperature, such as −10°C or below, up to a high temperature such as 100°C or higher. However, it is usually more desirable to employ a more conventional temperature from about 30°C to 90°C.

The molecular weight regulating compound is ethylene. It has been determined that the amount of ethylene needed to control molecular weight in the process of the present invention is from 0.48 to 1.83 parts by weight per hundred parts by weight of butadiene employed in the polymerization system.

The practice of this invention is further illustrated by reference to the following examples which are representative rather than restrictive of the scope of the invention. Unless otherwise noted, all parts and percentages are by weight. Dilute solution viscosities (DSV) were determined by using approximately 0.25 grams of polymer dissolved in 50 ml of toluene and obtaining the viscosity at 30°C.

## Examples

A premix solution of 15% by weight 1,3-butadiene in hexane was prepared and was dried, that is, trace amounts of water was removed by

passing this premix through a silica gel column under a nitrogen atmosphere. Portions of 100 ml of the solution were transferred to 0.118 liter polymerization bottles under nitrogen atmosphere. These bottles were capped using a punctured cap fitted with a self-sealing gasket and a Teflon™ liner.

Separately, ethylene was passed through a silica gel/alumina column, then fed directly into a syringe which was used to inject the regulator into the polymerization bottles.

In the following examples (1 through 7), various amounts of catalyst components and various amounts of ethylene were added to each of the several bottles, using a syringe and a needle, through the self-sealing gasket.

Example 1

In this example 0.046 grams or 0.48 parts per hundred of monomer (phm), based on the amount of butadiene in the bottle, of ethylene was injected into the bottle.

The catalyst components were then added in the order as follows: 0.40 ml of a 0.25 molar triisobutylaluminum solution in hexane. Next there was added 0.05 ml of a 0.05 molar nickel octanoate in hexane. Finally, there was added 1.05 ml of a 0.25 molar solution of hydrogen fluoride butyl ether complex in hexane. The thus charged polymerization bottle was placed in a 65°C water bath and rotated end-over-end for 1.5 hours. After that, the reaction was quenched by the addition of triisopropanolamine using approximately one part per 100 parts of butadiene charged. To stabilize the polybutadiene, 2,6-ditertiary-p-cresol at 1 part per one hundred parts of monomer charged was added. The polybutadiene cement was air dried to a constant weight. The polymer yield was calculated at 8.08 grams or 85% theoretical conversion. The polymer dilute solution viscosity (DSV) was determined to be 2.86 dl/g.

Example 2

A polymerization was conducted identical to that of Example 1, except that 0.093 g or 0.98 phm of ethylene was employed. The polymer yield was 7.31 g or 77% theoretical conversion. The polybutadiene had a DSV of 2.33 dl/g.

Example 3

A polymerization was conducted identical to that of Example 1, except that 0.174 g or 1.83 phm of ethylene was employed. A polymer yield of 5.96 g or 63% of theoretical conversion was obtained. The polybutadiene had a DSV of 1.92 dl/g.

**Claims**

1. A process for the regulation of the molecular weight of a high cis-1,4-polybutadiene prepared by polymerizing 1,3-butadiene in a solution of an aliphatic and/or cycloaliphatic solvent system employing as a catalyst system a mixture of (1) a nickel salt of a carboxylic acid, (2) a trialkylaluminum compound, and (3) a fluorine containing compound prepared by complexing hydrogen fluoride with ethers; wherein the mole ratio of said trialkylaluminum compound to said nickel salt of a carboxylic acid ranges from 0.3/1 to 300/1, wherein the mole ratio of said fluorine containing compound to said nickel salt of a carboxylic acid ranges from 0.5/1 to 500/1, and wherein the mole ratio of the fluorine containing compound to the trialkylaluminum compound ranges from 0.4/1 to 15/1; characterized in that said polymerization is conducted in the presence of 0.48 to 1.83 parts by weight of ethylene per hundred parts by weight of 1,3-butadiene and in that the 1,4-polybutadiene prepared has a dilute solution viscosity of 30°C in toluene at a concentration of 0.25 grams per 50 millimeters of toluene of less than 3 dl/g.

2. A process according to claim 1 characterized in that the mole ratio of the trialkylaluminum compound/the nickel salt of the carboxylic acid ranges from 2/1 to 80/1, the mole ratio of the fluorine containing compound to the nickel salt of a carboxylic acid ranges from 3/1 to 150/1 and the mole ratio of the fluorine containing compound to the trialkylaluminum compound ranges from 1/1 to 10/1.

3. A process according to claim 1 or 2 characterized in that the nickel salt of a carboxylic acid is nickel octanoate, the trialkylaluminum compound is triethylaluminum or triisobutylaluminum and the fluorine containing compound is hydrogen fluoride complexed with dibutyl ether.

**Patentansprüche**

1. Verfahren zur Regulierung des Molekulargewichts eines Polybutadiens mit hohem cis-1,4-Gehalt, hergestellt durch Polymerisation von 1,3-Butadien in einer Lösung eines aliphatischen und/oder cycloaliphatischen Lösungsmittelsystems, in dem als Katalysatorsystem eine Mischung aus (1) einem Nickelsalz einer Carbonsäure, (2) einer Trialkylaluminiumverbindung und (3) einer Fluor enthaltenden Verbindung, hergestellt durch Komplexbildung von Fluorwasserstoff mit Ethern, verwendet wird, wobei das Molverhältnis der Trialkylaluminiumverbindung zu dem Nickelsalz einer Carbonsäure zwischen 0,3/1 und 300/1 schwankt, das Molverhältnis der Fluor enthaltenden Verbindung zu dem Nickelsalz einer Carbonsäure zwischen 0,5/1 und 500/1 liegt, und das Molverhältnis der Fluor enthaltenden Verbindung zu der Trialkylaluminiumverbindung zwischen 0,4/1 und 15/1 liegt, dadurch gekennzeichnet, daß die Polymerisation in Gegenwart von 0,48 bis 1,83 Gew.-Teilen Ethylen pro 100 Gew.-Teile 1,3-Butadien durchgeführt wird, und daß das hergestellte 1,4-Polybutadien eine Viskosität in verdünnter Lösung (dilute solution viscosity) bei 30°C in Toluol bei einer Konzentration von 0,25 g pro 50 ml Toluol von weniger als 3 dl/g besitzt.

2. Verfahren nach Anspruch 1, dadurch gekennzeichnet, daß das Molverhältnis Trialkylaluminiumverbindung/Nickelsalz der Carbonsäure von 2/1 bis 80/1 schwankt, das Molverhältnis der Fluor enthaltenden Verbindung zu dem Nickelsalz einer Carbonsäure zwischen 3/1 und 150/1 liegt und das Molverhältnis der Fluor enthaltenden Verbindung zu der Trialkylaluminiumverbindung zwischen 1/1 und 10/1 variiert.

3. Verfahren nach Anspruch 1 oder 2, dadurch gekennzeichnet, daß das Nickelsalz einer Carbonsäure aus Nickeloctanoat, die Trialkylaluminiumverbindung aus Ethylaluminium oder Isobutylaluminium und die Fluor enthaltende Verbindung aus Fluorwasserstoff, komplexgebunden mit Dibutylether besteht.

**Revendications**

1. Procédé en vue de régler le poids moléculaire d'un polybutadiène à haute teneur en isomère cis-1,4 préparé en polymérisant du 1,3-butadiène dans une solution d'un système solvant aliphatique et/ou cycloaliphatique, en utilisant, comme système catalytique, un mélange de (1) un sel de nickel d'un acide carboxylique, (2) un composé d'aluminium-trialkyle et (3) un composé contenant du fluor préparé en complexant du fluorure d'hydrogène avec des éthers, procédé dans lequel le rapport molaire entre le composé d'aluminiumtrialkyle et le sel de nickel d'un acide carboxylique se situe dans l'intervalle allant de 0,3/1 à 300/1, le rapport molaire entre le composé contenant du fluor et le sel de nickel d'un acide carboxylique se situant dans l'intervalle allant de 0,5/1 à 500/1, tandis que le rapport molaire entre le composé contenant du fluor et le composé d'aluminium-trialkyle se situe dans l'intervalle allant de 0,4/1 à 15/1, caractérisé en ce que la polymérisation est effectuée en présence de 0,48 à 1,83 partie en poids d'éthylène par 100 parties en poids de 1,3-butadiène, tandis que le 1,4-polybutadiène préparé a, à 30°C dans du toluène et à une concentration de 0,25 g par 50 ml de toluène, une viscosité en solution diluée inférieure à 3 dl/g.

2. Procédé selon la revendication 1, caractérisé en ce que le rapport molaire entre le composé d'aluminium-trialkyle et le sel de nickel de l'acide carboxylique se situe dans l'intervalle allant de 2/1 à 80/1, le rapport molaire entre le composé contenant du fluor et le sel de nickel d'un acide carboxylique se situe dans l'intervalle allant de 3/1 à 150/1 et le rapport molaire entre le composé contenant du fluor et le composé d'aluminium-trialkyle se situe dans l'intervalle de 1/1 à 10/1.

3. Procédé selon la revendication 1 ou 2, caractérisé en ce que le sel de nickel d'un acide carboxylique est l'octonoate de nickel, le composé d'aluminium-trialkyle est l'aluminium-triéthyle ou l'aluminium-triisobutyle et le composé contenant du fluor est le fluorure d'hydrogène complexé avec l'éther dibutylique.